# EUROPEAN PATENT APPLICATION

(11) **EP 3 163 526 A1**
(43) Date of publication of application: **03.05.2017**
(21) Application number: 15306730.1
(22) Date of filing: 29.10.2015
(51) Int. Cl.: G06Q 20/32, G06Q 20/40

(54) **SECURE ELEMENT**

(71) Applicant: OBERTHUR TECHNOLOGIES, 92700 Colombes (FR)
(72) Inventor: CHAMBEROT, Francis, 92700 COLOMBES (FR); LOISEAU, Nicolas, 92700 COLOMBES (FR)
(74) Representative: Santarelli

(57) **Abstract**

A secure element (10) performs (40) a secure transaction by communicating with an external terminal (20). The transaction comprises a plurality of events when the secure element receives a command message from the external terminal and sends, in reply, a response message to the external terminal. During the secure transaction the secure element (10) determines (43) a time interval between sending a response message to the external terminal (20) and receiving a subsequent command message from the external terminal (20) and stores (47) log data indicative of the determined time interval at the secure element (10). The secure element (10) may send the stored log data to the external terminal (20) or perform (48) a security action at the secure element based on the log data. An external entity, such as an authorisation entity (30), may receive the log data and perform a security action based on analysis of the log data.

## Description

### BACKGROUND

A secure element is a device which can perform secure transactions with a reader or a terminal. The secure element can form part of an integrated circuit card (ICC), also called a chip card or a smart card. Alternatively, the secure element can be implemented as a chip which is embedded within a host device, such as a mobile phone.

A secure element is configured to communicate with an external device, called a terminal or a reader. The secure element can perform various types of transactions, such as a payment transaction or a transaction to authenticate the user. The secure element can support payment applications, such as a credit payment application and/or or a debit payment application. Integrated circuit cards can conform to the Europay, MasterCard, and Visa (EMV) Specifications.

As secure elements are used to perform financial transactions, it is important that fraudulent activity is prevented as early as possible. In the case of integrated circuit cards, the EMV specifications define a protocol which is intended to reduce the risk of fraud during a payment transaction by authenticating both the card and the card user. The authentication process uses a combination of cryptograms (or encrypted keys) and digital signatures and possibly requires entering a secret code (Personal Identification Number, PIN) by the card user. An EMV card can be used in an online mode or an offline mode. In the online mode the EMV card may communicate, via the terminal, with an authorisation entity to ensure that the current transaction is legitimate. In the offline mode criteria are used to decide whether the transaction should be allowed or denied, without involving the authorisation entity.

Card issuers can monitor card usage and can detect patterns of usage behaviour which may indicate fraudulent activity, such as a spending pattern which does not fit the normal pattern of usage for that card owner. This may indicate the card has been stolen. The card owner may be contacted to confirm that a transaction is genuine. Card issuers can enter a card on a so-called blacklist if the card is reported as stolen, to prevent future transactions.

US 7,036,018 describes an integrated security circuit with a control device which determines the number of executions of a security function per unit of time. The control device can block continued execution of the same security function if a threshold number of executions occurs per unit of time.

Further security is desired.

### SUMMARY

An aspect of the invention provides a method of operating a secure element comprising:
performing a secure transaction by communicating with an external terminal, the transaction comprising a plurality of events when the secure element receives a command message comprising a command from the external terminal and sends, in reply, a response message comprising a response to the command message to the external terminal and, during the secure transaction:
   determining a time interval between sending a response message to the external terminal and receiving a subsequent command message from the external terminal; and,
   storing log data indicative of the determined time interval at the secure element.

The method may further comprise: storing a threshold data value at the secure element; comparing the determined time interval with the threshold data value to give a result; and deciding whether to perform the storing of log data indicative of the determined time interval based on the result.

The method may further comprise sending the stored log data to the external terminal.

The method may send the stored log data to the external terminal in response to receiving a request to send the stored log data. Alternatively, the method may send the log data without receiving a request to obtain the log data.

The method may further comprise performing a security action at the secure element based on the log data. The security action may comprise one of: blocking at least one application at the secure element; blocking the entire secure element; slowing the rate of processing at the secure element; forcing an online transaction; or refusing a transaction.

The transaction may comprise a card authentication stage, a user verification stage and a transaction authorisation stage, and the method may determine a time interval between sending a response message to the external terminal and receiving a subsequent command message from the external terminal during one of the stages.

The user verification stage may comprise sending a Cardholder Verification Method, CVM, message to the external terminal and receiving a verification message from the external terminal carrying a Personal Identification Number, PIN, and the method may determine a time interval between sending the Cardholder Verification Method message to the external terminal and receiving the verification message from the external terminal.

The user verification stage may comprise sending a PIN not OK message to the external terminal and receiving a further verification message from the external terminal carrying a Personal Identification Number, PIN, and the method may determine a time interval between sending the PIN not OK message to the external terminal and receiving the verification message from the external terminal.

The user verification stage may comprise sending a challenge to the external terminal and receiving a verification message from the external terminal carrying an encrypted Personal Identification Number, PIN, and the method may determine a time interval between sending the challenge to the external terminal and receiving the verification message from the external terminal.

The transaction authorisation stage may comprise: computing an Authorization Request cryptogram; sending the Authorisation Request cryptogram, ARQC, message to the external terminal; and receiving an Authorisation Response cryptogram message, ARPC, from the external terminal; and the method may determine a time interval between sending the Authorisation Request cryptogram message and receiving the Authorisation Response cryptogram message.

The protocol between the secure element and the external terminal may comprise: receiving a Read Record message; sending a status message indicating an amount of data to be read; receiving a Get Response message; sending the data; wherein the method may determine a time interval between sending the status message to the external terminal and receiving the Get Response message from the external terminal.

An aspect of the invention provides a secure element comprising a processor, a memory and a communications interface, the memory containing instructions executable by the processor to cause the processor to:
perform a secure transaction by communicating with an external terminal, the transaction comprising a plurality of events when the secure element receives a command message comprising a command from the external terminal and sends, in reply, a response message comprising a response to the command message to the external terminal and, during the secure transaction:
   determine a time interval between sending a response message to the external terminal and receiving a subsequent command message from the external terminal; and,
   store log data indicative of the determined time interval at the secure element.

The instructions executable by the processor may cause the processor to: store a threshold data value at the secure element; compare the determined time interval with the threshold data value to give a result; and decide whether to perform the storing of log data indicative of the determined time interval based on the result.

The secure element may be configured to perform any of the described or claimed methods.

An aspect of the invention provides a method of operating an authorisation entity comprising:
servicing a secure transaction with a secure element, the transaction comprising a plurality of events when the secure element receives a command message comprising a command from an external terminal and sends, in reply, a response message comprising a response to the command message to the external terminal;
receiving log data from the secure element, the log data indicative of a time interval between the secure element sending a response message to the external terminal and receiving a subsequent command message from the external terminal; and,
analysing the log data to determine fraudulent activity.

The method may further comprise performing a security action based on the analysis of the log data. For example, the method may send a command to the secure element to block an application or to block the secure element. The method may refuse a transaction based on the log data. For example, log data regarding a transaction may be received during that transaction, and used to refuse that transaction, thereby preventing a potentially fraudulent transaction from occurring.

An aspect of the invention provides an authorisation entity comprising a processor, a memory and a communications interface, the memory containing instructions executable by the processor to cause the processor to:
service a secure transaction with a secure element, the transaction comprising a plurality of events when the secure element receives a command message comprising a command from an external terminal and sends, in reply, a response message comprising a response to the command message to the external terminal;
receive log data from the secure element, the log data indicative of a time interval between the secure element sending a response message to the external terminal and receiving a subsequent command message from the external terminal; and,
analyse the log data to determine fraudulent activity.

An advantage of at least one example is that it is possible to identify one or more time intervals (i.e. a timing rhythm) that do not fit the context of a genuine transaction. Such anomalous time intervals may be indicative of fraudulent activity, such as an attack on the secure element.

An advantage of at least one example is that the secure element can acquire information indicative of fraudulent activity which it may not be possible to determine at another entity external to the secure element.

The functionality described here can be implemented in hardware, software executed by a processing apparatus, or by a combination of hardware and software. The processing apparatus can comprise a computer, a processor, a state machine, a logic array or any other suitable processing apparatus. The processing apparatus can be a general-purpose processor which executes software to cause the general-purpose processor to perform the required tasks, or the processing apparatus can be dedicated to perform the required functions. Another aspect of the invention provides machine-readable instructions (software) which, when executed by a processor, perform any of the described or claimed methods. The machine-readable instructions may be stored on an electronic memory device, hard disk, optical disk or other machine-readable storage medium. The machine-readable medium can be a non-transitory machine-readable medium. The term "non-transitory machine-readable medium" comprises all machine-readable media except for a transitory, propagating signal. The machine-readable instructions can be downloaded to the storage medium via a network connection.

### BRIEF DESCRIPTION OF THE DRAWINGS

Embodiments of the invention will be described, by way of example only, with reference to the accompanying drawings in which:
Figure 1 shows a secure element, a terminal and an authorisation entity which can be used to implement one of the methods;
Figure 2 shows stages of a secure transaction;
Figure 3 shows a method performed by the secure element;
Figure 4 shows an example of a measured time interval during user authentication;
Figure 5 shows another example of a measured time interval during user authentication;
Figure 6 shows an example of a measured time interval during encrypted user authentication;
Figure 7 shows an example of a measured time interval during transaction authorisation;
Figure 8 shows an example of a relay attack;
Figure 9 shows an example of a measured time interval;
Figure 10 shows an example of a data structure to store threshold values;
Figure 11 shows functional modules of a secure element in more detail;
Figure 12 shows an example of a method performed by an authorisation entity;
Figure 13 shows functional modules of an authorisation entity;
Figure 14 shows apparatus for a computer-based implementation.

### DETAILED DESCRIPTION

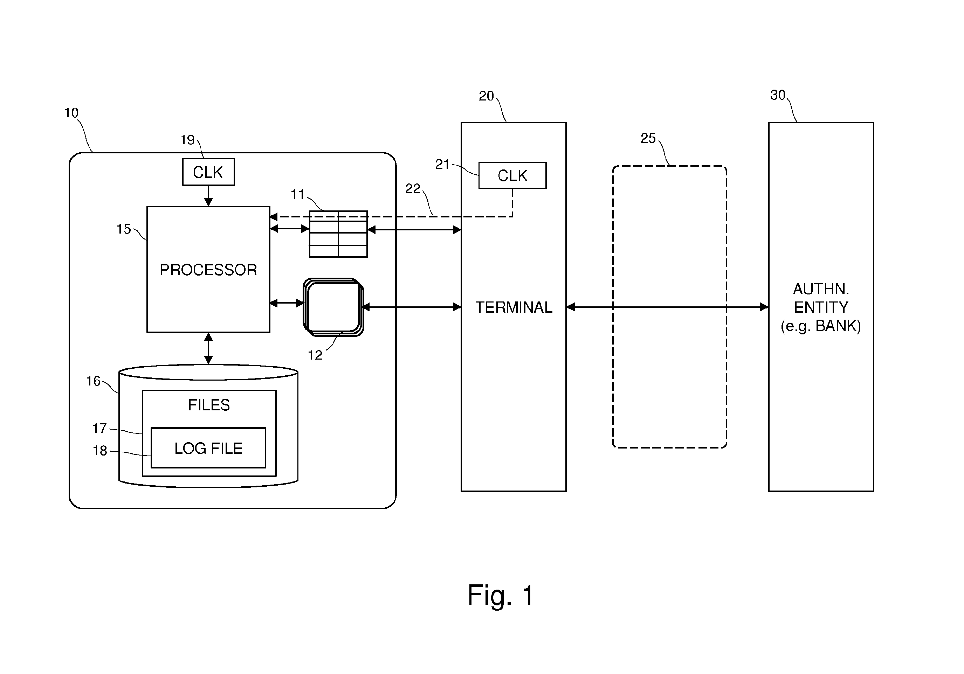

Figure 1 shows an example of a secure element in the form of an integrated circuit card (ICC) 10, or chip card. The chip card 10 comprises a processor 15 which is operatively connected to storage 16. Storage 16 includes non-volatile storage. Storage 16 can comprise solid state memory. The chip card 10 has at least one external interface 11, 12 for communicating with a terminal 20. The terminal 20 can also be called a card reader. Examples of terminals 20 are an Automated Teller Machine (ATM) and a Point of Sale (PoS) terminal. The external interfaces may be a contact interface 11 and/or a contactless interface 12. Communication with the terminal 20 is typically via ISO 7816 APDUs. The terminal 20 communicates with an authorisation entity 30 via a network 25. The secure element may be embedded into an ISO 7810 format card, such as an ID-1 format card (e.g. typically used for bank cards and credit/debit cards) or an ID-000 format card (e.g. typically used for SIM cards). In other examples, the secure element may be embedded directly into a host device, such as a circuit board of a mobile phone.

In Figure 1, the non-volatile storage 16 can store applications, such as payment applications. The non-volatile storage 16 can store cryptographic keys for secure communication between the card 10, terminal 20 and authorisation entity 30. The non-volatile storage 16 can store a file system 17. The file system 17 comprises a log file 18 which stores time intervals measured by the processor 15. The secure element 10 provides a secure environment in which the applications can be executed and data can be stored.

There are several possible ways in which the secure element can obtain a clock signal for use in timing intervals. The secure element 10 may have an internal clock 19, providing a clock signal which the processor 15 can use to time intervals between events. The secure element 10 may receive an external clock signal 22 from a clock 21 within the terminal 20. The processor 15 may convert an accumulated number of clock cycles to a measure of time. For example, for a clock signal at 1MHz, 1,000,000 clock cycles = 1 second. Alternatively, the processor 15 may store a count of a number of clock cycles as a measure of a time interval.

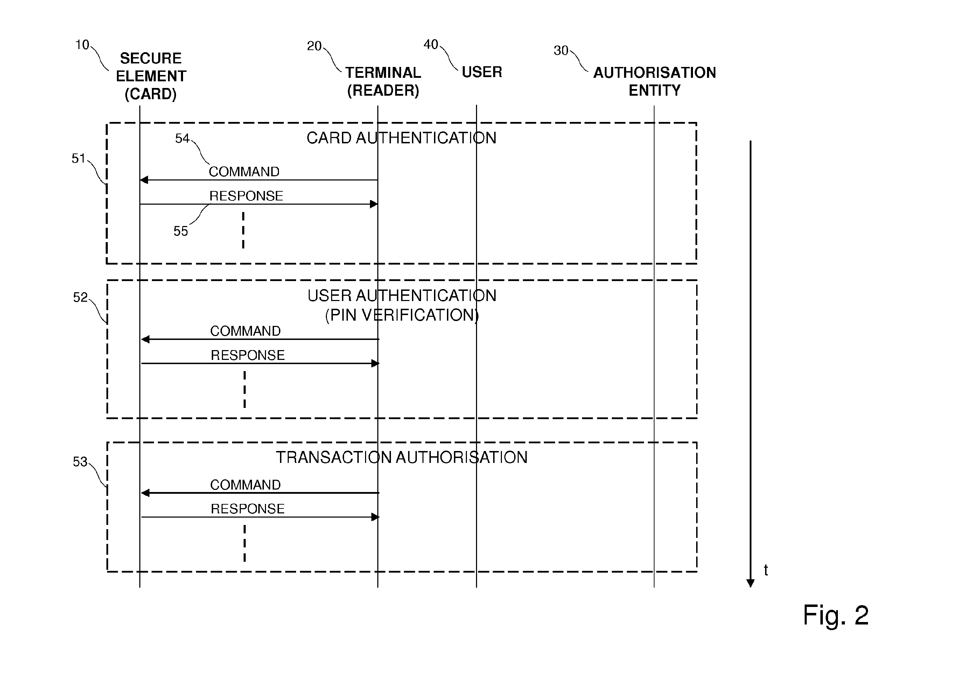

Figure 2 shows an overview of a transaction between a secure element 10, a terminal 20, an authorisation authority 30 and a user 40. An EMV transaction with a card will be described as an example. Other types of transaction protocol are possible. More generally, the card can be any kind of secure element. The transaction begins with a card authentication stage 51. During the card authentication stage 51 the terminal 20 communicates with the card 10 to obtain details of the card. The card 10 may support more than one payment application, such as a debit application and a credit application. The card 10 may support contact-based communication and/or contactless communication. The terminal 20 begins by selecting an 'entry point'. The card 10 responds with a list of applications supported by the card. The terminal 20 then selects a specific application from the list. In the exchanges which follow, the reader receives an indication of the files that need to be read to complete the transaction. As part of the card authentication stage 51, the terminal 20 retrieves the card PAN (Primary Account Number) and Expiry Date of the card 10.

The next stage of the transaction is a user (cardholder) verification stage 52. A Personal Identification Number (PIN) known to the user authenticates the user. The terminal 20 requests the user to enter their Personal Identification Number (PIN) on the keypad of the terminal 20. Typically, a display of the terminal 20 displays a message requesting the user to enter their PIN. The PIN is sent to the card 10. The user is verified by comparing the PIN received from the terminal 20 with a PIN stored securely at the card 10. If the PIN has been entered correctly the method can proceed to a transaction authorisation stage 53. The transaction may be authorised in an online manner, by communication between the card 10, the terminal 20 and authorisation entity 30. The card receives a response which authorises the transaction or refuses the transaction. Alternatively, the transaction may be authorised in an offline manner. The terminal 20 may store rules which determine when it is able to perform an offline authorisation of a transaction. For example, a rule may indicate the maximum monetary amount of a transaction which can be authorised in an offline manner. The card 10 may also use rules to refuse a transaction.

Communication between the terminal 20 and the secure element 10 is in the form of pairs of command-response messages 54, 55. The secure element 10 receives a command message 54 comprising a command to perform a certain action. The secure element 10 replies by sending a response message 55 comprising a response to the command message 54. The response message 55 may comprise data or a cryptogram. In the context of ISO 7816, the command message is called a command APDU and the response message is called a response APDU.

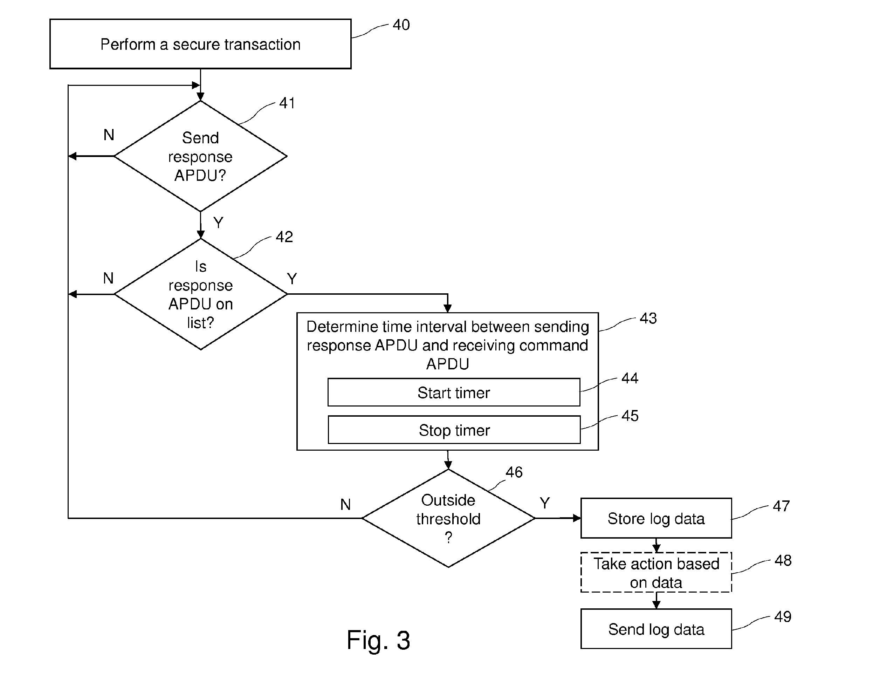

Figure 3 shows an overview of a method performed by the secure element, such as the secure element 10 shown in Figure 1. At block 40 the secure element performs a secure transaction by communicating with an external terminal 20. Block 41 determines when a response APDU is sent to the terminal. The secure element may only measure time intervals between certain pairs of APDUs. In that case, an optional block 42 may determine if the response APDU is one of interest. If the response APDU is of interest, the method proceeds to block 43 and determines a time interval between sending a response message to the external terminal and receiving a subsequent command message from the external terminal. This can comprise starting a timer at block 44 and stopping the timer at block 45.

Optionally, the method may store one or more threshold data values at the secure element. The method can compare the determined time interval with the threshold data value to give a result and then decide whether to perform the storing of log data indicative of the determined time interval based on the result of the comparison of the determined time interval with the threshold data value. The threshold value may be an upper threshold or a lower threshold. If the measured time interval is outside the threshold (e.g. measured time interval is lower than a lower threshold) the method proceeds to block 47 and logs data about the time interval and, optionally, any other relevant data about the events which caused that time interval.

Optionally, the secure element may take a security action based on the log data. For example, the secure element may block an application, block the entire secure element, slow the rate of processing at the secure element, force an online transaction or refuse a transaction.

At some later time the secure element may send the log data to an external entity at block 49. The log data sent at block 49 can be a batch of log data in respect of a plurality of time intervals which are indicative of potentially fraudulent activity. The log data can be sent to an authorisation entity, card issuer or some other entity external to the secure element. The external entity can analyse the log data. The external entity may take action based on the log data, such as blocking an application or a secure element (card) if an attack is suspected on the secure element (card).

The secure element may send the log data (block 49) during a transaction. The log data may be sent during the same transaction when the log data was acquired. For example, log data relating to a time interval indicative of a PIN attack can be sent during that transaction, when communicating with an authorisation entity. This can allow the authorisation entity to make use of the log data and to take action, such as refusing the transaction, based on the log data.

In general, the method is based on the observation that, during a transaction, certain sequences of commands and responses occur together. Furthermore, there are time limits within which one command should follow another. By timing the gaps between commands and responses, or between different commands, it is possible to identify rhythms that do not fit the context of a payment transaction. Such anomalous rhythms may be the result of fraudulent activity.

### Rhythm too Fast

Some examples are now described where a secure element detects timing intervals are too short, i.e. the rhythm is too fast. This may indicate fraudulent activity.

### Example 1 - PIN entry

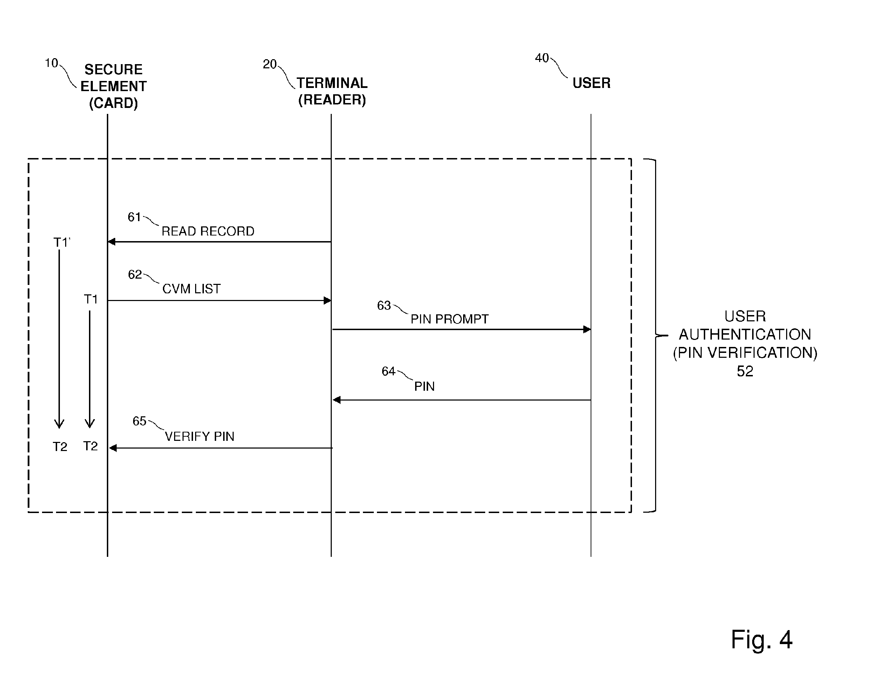

Figure 4 shows an example of determining timing intervals during the user authentication stage 52 of a transaction. The terminal sends a command APDU "READ RECORD" 61 to the secure element 10. Command APDU 61 instructs the secure element 10 to read a particular record from a file stored on the secure element. This record, the Cardholder Verification Method, or CVM, list contains information that the terminal 20 needs in order to decide whether to prompt the user to enter their PIN. The secure element 10 sends a response APDU 62 containing the CVM list. The terminal 20 determines that a PIN is required. The terminal prompts 63 the user to enter their PIN, such as by displaying a message on a display of the terminal 20. The user enters the PIN at 64. The terminal 20 sends a command APDU "VERIFY PIN" 65 to the secure element 10. Command APDU 65 carries the PIN entered by the user.

The secure element 10 determines the time interval between sending the response APDU 62 carrying the CVM list at time T1 and receiving the command APDU "VERIFY PIN" 65 at time T2. This time interval T1→T2 usually falls within a predetermined timing range. There is a lower time limit representing the minimum time it takes a user to respond to the visual prompt to enter their PIN and to manually enter a PIN on a keypad of the terminal. If the VERIFY PIN command APDU 65 is received more quickly than this lower limit, it indicates that the PIN in the VERIFY PIN command APDU 65 has not been entered manually. This indicates potentially fraudulent activity. The secure element 10 can log this data. Optionally, the secure element 10 can take a security action based on the log data, such as blocking an application, blocking the entire secure element, slowing processing, forcing an online transaction or refusing a transaction.

### Example 2 - PIN re-entry

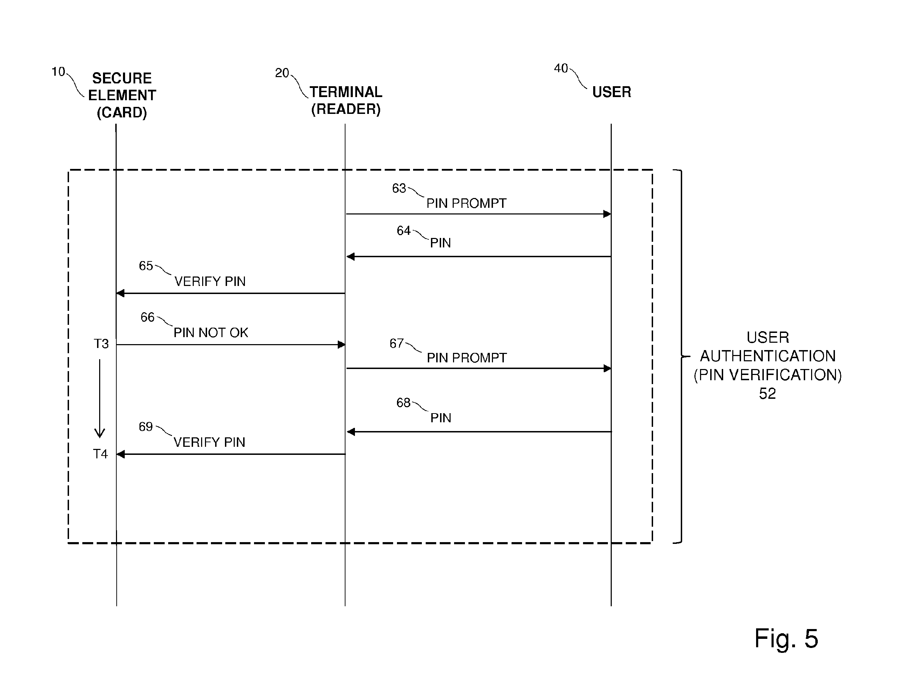

Figure 5 shows another example of determining timing intervals during the user authentication stage 52 of a transaction. The scenario shown in Figure 5 occurs just after the scenario shown in Figure 4. As previously described, the terminal 20 determines that a PIN is required. The terminal prompts 63 the user to enter their PIN, such as by displaying a message on a display of the terminal 20. The user enters the PIN at 64. The terminal 20 sends a command APDU "VERIFY PIN" 65 to the secure element 10. Command APDU 65 carries the PIN entered by the user. The secure element 10 determines if the PIN received in the command APDU "VERIFY PIN" 65 is correct, by comparing with a PIN stored at the secure element 10. If the secure element determines that the user entered an incorrect PIN, they are given a further opportunity to enter a correct PIN. The secure element 10 sends a response APDU "PIN NOT OK" 66 to the terminal. The terminal 20, again, prompts 67 the user to enter their PIN, such as by displaying a message on a display of the terminal 20. The user enters the PIN at 68. The terminal 20 sends a command APDU "VERIFY PIN" 69 to the secure element 10.

The secure element 10 determines the time interval between sending the response APDU "PIN NOT OK" 66 at time T3 and receiving the command APDU "VERIFY PIN" 69 at time T4. The time interval T3→T4 usually falls within a predetermined timing range. There is a lower time limit representing the minimum time it takes a user to respond to the visual prompt to re-enter their PIN and to manually enter a PIN on a keypad of the terminal 20. If the VERIFY PIN command APDU 69 is received more quickly than this lower limit, it indicates that the PIN in the VERIFY PIN command APDU 69 has not been entered manually. This indicates potentially fraudulent activity. The secure element 10 can log this data. Optionally, the secure element 10 can take a security action based on the log data.

### Example 3 - PIN entry (encrypted)

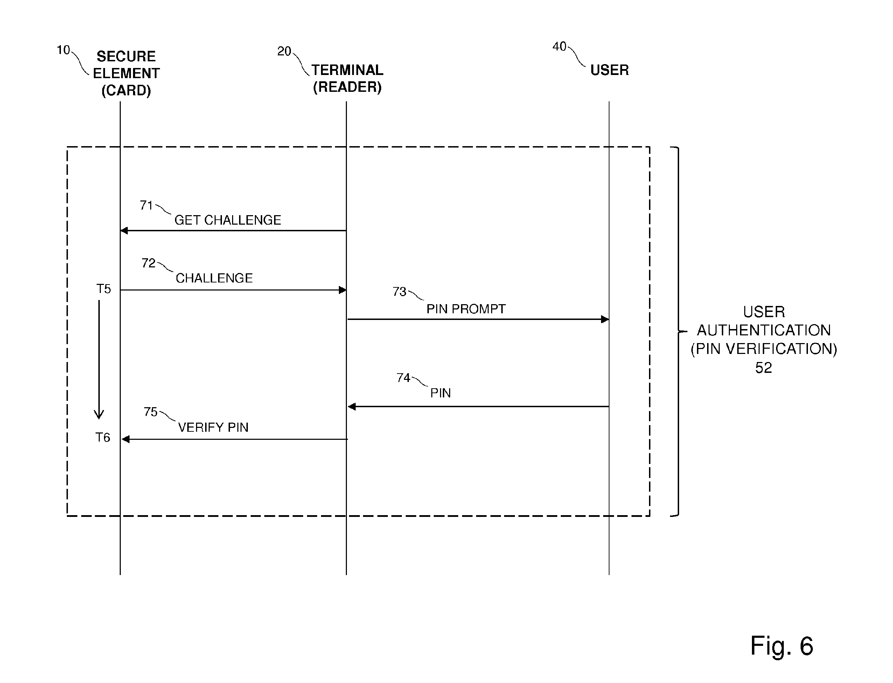

In cards which support public key cryptography, the terminal 20 may use the card's public key to encrypt the PIN data during the user authentication stage 52 of a transaction. Figure 6 shows an example of this scenario. The terminal 20 sends a command APDU "GET CHALLENGE" 71 to the secure element 10. This requests the secure element 10 to provide a challenge. The secure element 10 sends a response APDU "CHALLENGE" 72 to the terminal 20 at time t5. The terminal 20 prompts 73 the user to enter their PIN, such as by displaying a message on a display of the terminal 20. The user enters the PIN at 74. The terminal 20 sends a command APDU "VERIFY PIN" 65 to the secure element 10. Command APDU 75 carries the PIN entered by the user, along with the challenge it received in the response APDU 72. The command APDU 75 is encrypted using the secure element's public key.

The secure element 10 determines the time interval between sending the response APDU "CHALLENGE" 72 at time T5 and receiving the command APDU "VERIFY PIN" 75 at time T6. The time interval T5→T6 usually falls within a predetermined timing range. There is a lower time limit representing the minimum time it takes a user to respond to the visual prompt to enter their PIN and to manually enter a PIN on a keypad of the terminal 20. If the VERIFY PIN command APDU 75 is received more quickly than this lower limit, it indicates that the PIN in the VERIFY PIN command APDU 75 has not been entered manually. This indicates potentially fraudulent activity. The secure element 10 can log this data. Optionally, the secure element 10 can take a security action based on the log data.

### Example 4 - Transaction authorisation

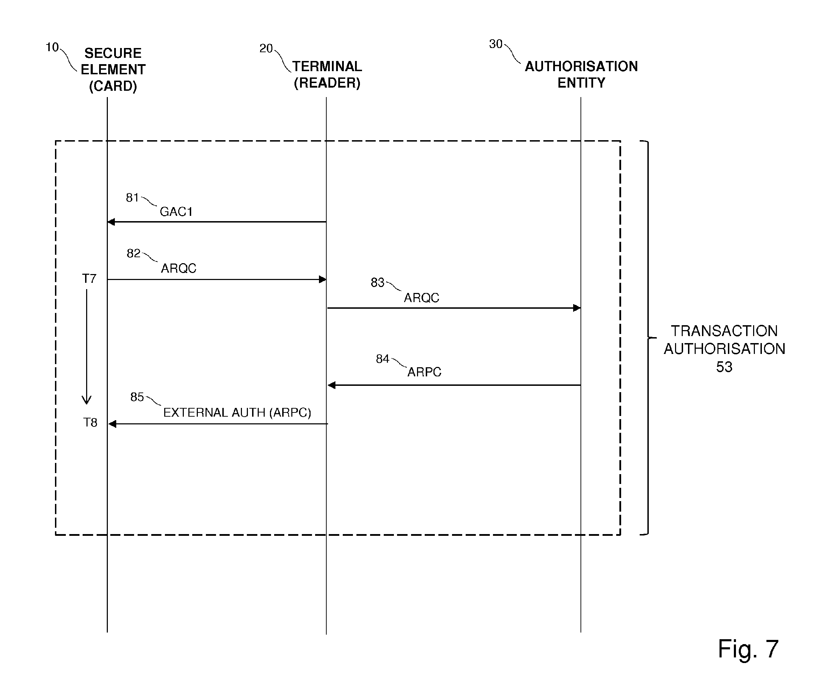

Figure 7 shows an example of determining timing intervals during the transaction authorisation stage 53 of a transaction. This example relates to online transaction authorisation. The terminal 20 sends the secure element 10 a command APDU "GENERATE APPLICATION CRYPTOGRAM" GAC1 81. The secure element 10 computes an Authorisation Request Cryptogram (ARQC) over the transaction data to be sent to the terminal 20. The secure element 10 sends a response APDU 82 which includes the ARQC. The cryptogram ARQC is forwarded 83 from the terminal 20 to the authorisation entity 30. The authorisation entity 30 verifies the incoming cryptogram ARQC and authorises or refuses to authorise the transaction. The authorisation entity 30 generates a new cryptogram Authorisation Response Cryptogram (ARPC) from a combination of the issuer's response code (Authorisation Response Code, ARC) and the ARQC. This new cryptogram ARPC is sent 84 to the terminal 20. The terminal 20 sends a command APDU "EXTERNAL AUTHENTICATE" 85 which includes the ARPC.

The secure element 10 determines the time interval between sending the response APDU 82 at time T7 and receiving the command APDU "EXTERNAL AUTHENTICATE" 85 at time T8. The time interval T7→T8 usually falls within a predetermined timing range. There is a lower time limit representing the minimum time it takes for the communication between the secure element 10, terminal 20 and authorisation entity 30 in the two directions. If the command APDU 85 is received more quickly than a lower limit, it indicates that the communication path may have been compromised. This indicates potentially fraudulent activity, such as an attack on the key used to encrypt communication between the secure element and the authorisation entity. The secure element 10 can log this data. Optionally, the secure element 10 can take a security action based on the log data.

### Rhythm too Slow

An example is now described where a secure element detects timing intervals are too long, i.e. the rhythm is too slow. This may indicate fraudulent activity.

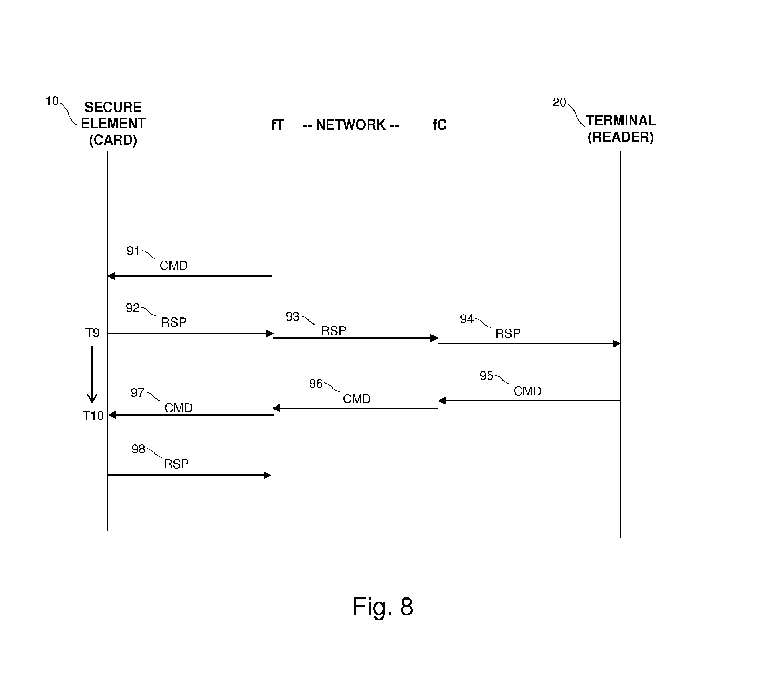

So called 'relay attacks' have been carried out against payment cards. Figure 8 shows an example of a relay attack with a fraudulent terminal fT and a fraudulent card fCpositioned between a genuine secure element 10 and a genuine terminal 20. The fraudulent terminal fT is connected across a network to the fraudulent card further comprising via a combination of wire and wireless connections. The victim uses his secure element (e.g. card) 10 with the fraudulent terminal fT. Fraudulent terminal fT sends the correct sequence of commands to the secure element 10 in order to carry out a payment transaction for a value of say, $2000, whilst displaying details of a 20$ transaction to the user. fT relays the corresponding sequence of card responses to a fraudulent card, fC, used by a fraudster on the other side of town or hundreds of miles away, who carries out the relayed transaction with a genuine terminal for $2000. The transaction for 20$ is effectively replaced by a transaction for 2000$. Details of a relay attack of this type were published in 2007 by two Cambridge University scientists, Saar Drimer and Steven Murdoch under the title, "Keep Your Enemies Close: Distance Bounding Against Smartcard Relay Attacks". The authors propose a defence against relay attacks that involves modifications to the terminal. The monitoring of time intervals between commands and/or responses, in this disclosure, offer a simpler solution that requires no changes to the existing terminal infrastructure.

The time between sending a response APDU 92 at time T9 and receiving the next command APDU 97 at time T10 has a typical range of values. When a fraudulent terminal fT and fraudulent card fC are involved in the communication path, the time interval T9→T10 is likely to be longer than the equivalent time interval when the communication has not been relayed.

To measure this interval it is possible to take advantage of a specific characteristic of the ISO 7816-3 T=0 protocol. Under T=0 the card does not return data directly. If a command needs to return data, it returns a two byte status word, 61xx, where xx is the number of bytes to read, the reader then issues a GET RESPONSE command with its P3 parameter set to xx. Consider an example of a READ RECORD command.

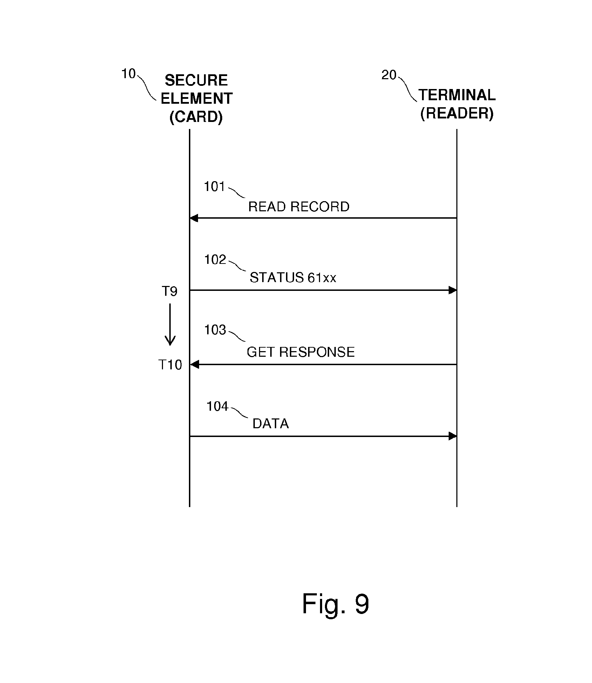

Figure 9 shows a sequence of exchanges between the secure element 10 and the terminal 20 for a T=0 protocol exchange. Terminal 20 sends a command APDU "READ RECORD" 101. Secure element 10 sends a response APDU 102 with a two byte status word 61xx indicating the number of bytes to be read. Terminal 20 sends a command APDU "GET RESPONSE" 103 with a P3 parameter set to the value xx. Secure element 10 sends a response APDU 104 with the data.

The secure element 10 determines the time interval between sending the response APDU 102 at time T9 and receiving the command APDU "GET RESPONSE" 103 at time T10. The terminal should respond quickly, as the terminal only has to receive the response APDU 102 and send the command APDU 103. Therefore, the time interval T9→T10 should usually fall within a predetermined timing range. There is an upper time limit representing the maximum time it takes for the communication between the secure element 10 and terminal 20. If the command APDU 103 is received more slowly than the upper limit, it indicates that the communication path may have been compromised by a relay attack, or it may indicate a problem with the reader. This indicates potentially fraudulent activity. The secure element 10 can log this data. Optionally, the secure element 10 can take a security action based on the log data.

In the examples described above, the secure element 10 determines time intervals between pairs of events. The pair of events are: (i) sending a response APDU and (ii) receiving a subsequent command APDU. The secure element 10 is configured to start a timer at event (i) and stop the timer at event (ii). The secure element 10 can be configured to start a timer with every outgoing response. At the application level, the command or, more precisely, the process that executes the command, defines the content of the response to the command. Once the content of the response has been defined, the sending of the response is handled by the transport layer. The timer can be started immediately after the transport layer sends out the last byte of whatever response data the application layer has requested it to transfer. Alternatively, some other trigger point can be selected, such as when the transport layer sends the first byte of the response data. The timer restarts from zero for every response sent out by the secure element. The value of this timer is made available to the application layer via a system call. The stop event is an incoming command.

The time interval recorded by a timer can be used in one of several possible ways. A first way of using the time interval data is to record the time interval data along with other data parameters, such as: parameters defining the start event (e.g. response APDU); parameters defining the stop event (e.g. command APDU); date and time at which the pair of events occurred. Other parameters may include one or more of: a transaction amount; an identifier of the terminal.

A second way of using the time interval data is to compare the measured time interval with a threshold value for that type of event pair. For example, the PIN entry example (example 1) described above has a lower threshold limit for a time interval, representing a minimum time for manual entry of a PIN. The secure element 10 can compare the measured time interval with the respective threshold limit, and log data based on that comparison. If the measured time interval falls below a minimum threshold value (or above a maximum threshold value), the secure element 10 logs the data. This has an advantage of reducing the amount of logged data, and reduces the amount of data sent to an external entity.

One or more commands can be associated with rules at the secure element. For the PIN-entry example described above, an example rule is:

```
VERIFY PIN {
              constant: RCI-LIMIT;
               response-command-interval = gettime(now) - gettimer(TO);
              if (response-command-interval < RCI-LIMIT)
                     log(response-command-interval, environment-parameter-1,
 environment-parameter-2, ...)
```

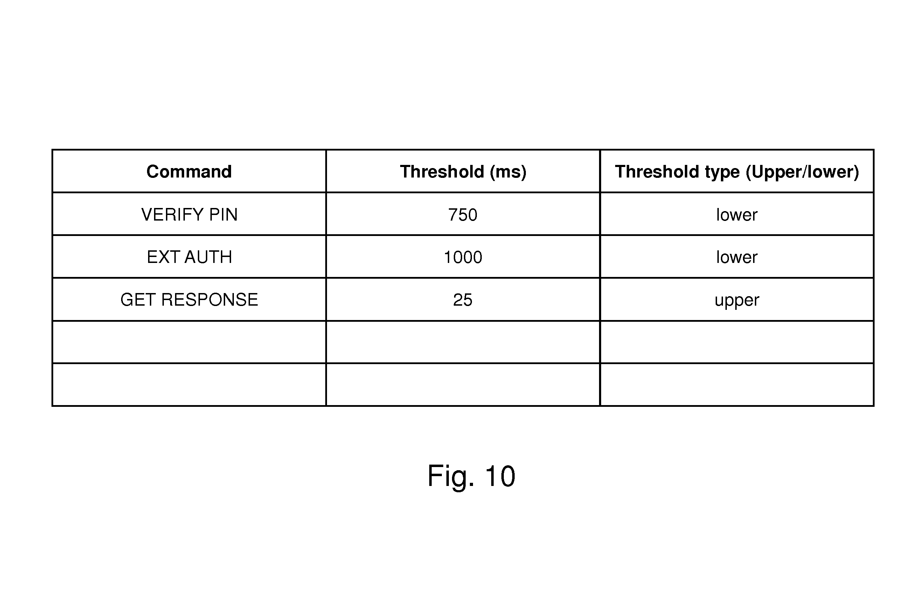

The threshold values, or limits, can be written into constant values within the environment of the command itself, as shown above, or into a data-structure accessible to all commands. Figure 10 shows an example data structure. The data structure stores: command types; threshold values; and an indication of whether the threshold is a lower threshold or an upper threshold. In Figure 10 the threshold values represent a number of milliseconds. Other units of time are possible. It is also possible to store a threshold value as a number of clock cycles. The number of clock cycles is indicative of a time period. For example, for a clock operating at 1MHz (= 1,000,000 cycles per second), 25ms is equal to 25,000 clock cycles.

If the thresholds are written into the code that executes the commands, they can form part of the operating system, which is either written into read-only memory (ROM) during chip manufacture or written into Electrically Erasable Read-Only Memory (EEPROM) during pre-personalisation of the secure element. An alternative arrangement is to write the thresholds into the EEPROM into a table held in a file. This can be performed during pre-personalisation.

The entries may be encrypted before being written to the log file. The log file can be a fixed length 'Elementary File' as defined in ISO 7816-4. The log file can be a cyclic file such that successive write record operations advance a record pointer. When the pointer reaches the last record, it cycles back round to the first record.

The GET RESPONSE command is not an application level command, despite the fact that it is sent by the terminal to the secure element 10 in a command APDU. The card handles the GET RESPONSE command in the transport layer. If the table in Figure 10 is within the scope of the transport layer functions, then the preamble can also be implemented using the table in Figure 10, otherwise the threshold value is written directly into the environment of the code that executes the GET RESPONSE function.

### Sending log data

The log data stored by the secure element can be sent to a terminal or other external entity. The log data is stored in a file, in clear text or encrypted form. Storing log data may change the state of the secure element in such a way that the next time the secure element is used to perform a transaction, the terminal will read the log data file during the course of the transaction.

The log file on the card has access rights which determine under what conditions the file can be read. A suitable mechanism is part of the ISO 7816 standard. It may be possible for any terminal to access the file, subject to the access conditions, using a READ RECORD command.

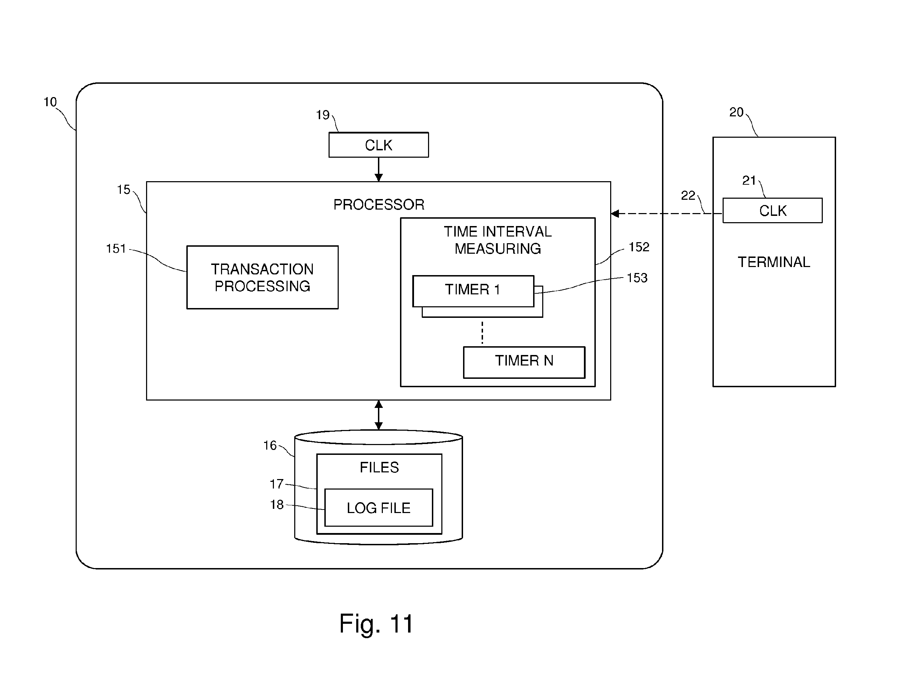

Figure 11 shows an example of functional modules of the secure element 10 to perform the methods described above. The processor 15 comprises a transaction processing module 151 and a time interval measuring module 152. The transaction processing module 151 is configured to receive command APDUs and to send response APDUs. The transaction processing module 151 is configured to access files 17 in non-volatile storage 16. The time interval measuring module 152 is configured to measure time intervals between sending and receiving APDUs. The time interval measuring module 152 is configured to maintain one or more timers 153. The time interval measuring module 152 can use a clock signal from an internal clock 19 or an external clock 21. A plurality N of timers 153 are shown in Figure 11. The time interval measuring module 152 is configured to store data about measured time intervals in a log file 18 in storage 16.

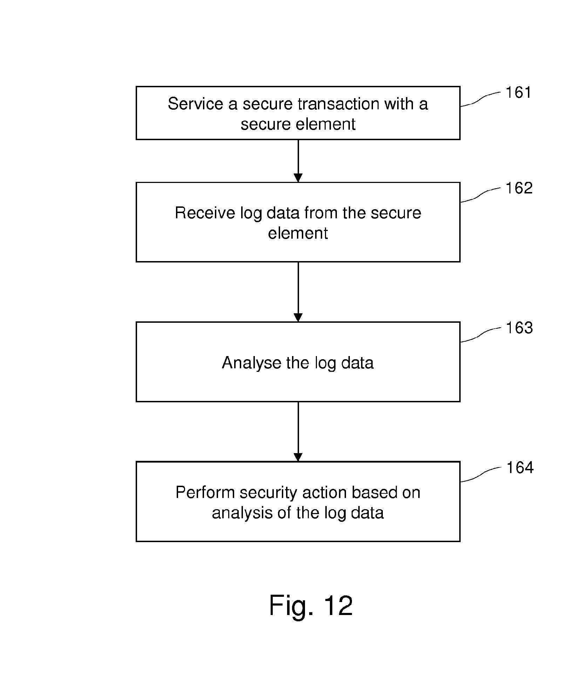

Figure 12 shows an overview of a method performed by an authorisation entity 30. At block 161 the authorisation entity services a transaction with a secure element 10. This may occur during the transaction stage 53 shown in Figure 2 and Figure 7. At block 162 log data is received from the secure element 10, via the terminal 20. The log data may be data for one transaction, or a batch of transactions. At block 163 the log data is analysed. The analysis may combine the log data from the secure element with other data available to the authorisation entity, such as historical data of transactions of that secure element (date/time, amount, location etc.) At block 164 the method may take action based on analysis of the log data. For example, the method may determine that the secure element has been compromised, and may block further transactions involving that secure element. The method may place the details of that secure element on a blacklist. In an example, the log data can be received (block 162) during the same transaction to which the log data relates. For example, log data regarding a suspiciously long time interval measured during the user authentication/PIN entry stage 52 of a transaction can be sent to the authorisation entity 30 during the transaction authorisation stage 53. The authorisation entity 30 may use the log data to decide whether to allow or to refuse the transaction.

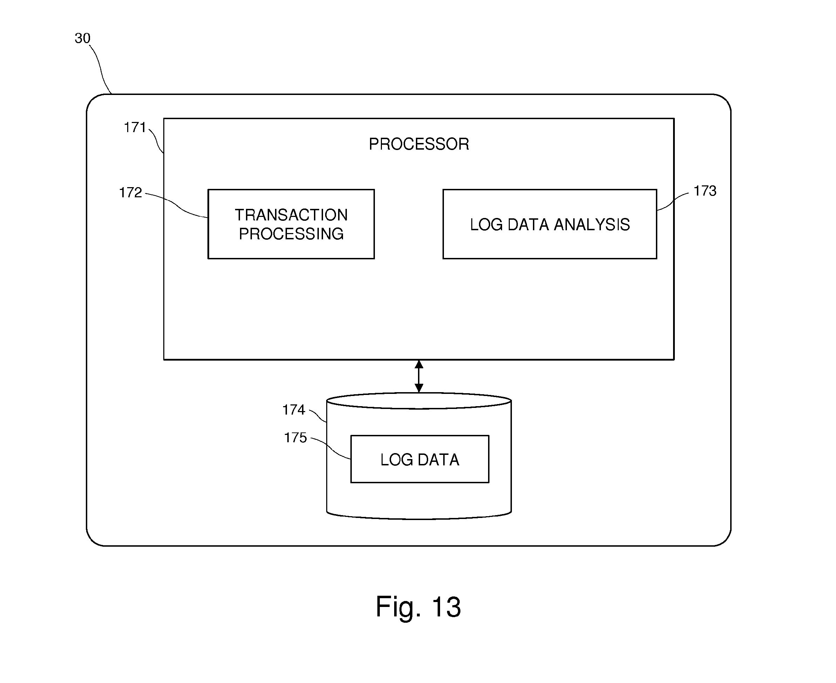

Figure 13 shows an example of functional modules of the authorisation entity 30 to perform the method described above. A processor 171 comprises a transaction processing module 172 and a log data analysis module 173. The transaction processing module 171 is configured to send command APDUs and to receive response APDUs. The transaction processing module 171 is configured to receive log data from a secure element and store the log data in storage 174. Storage 174 can be located locally to the authorisation entity, or at a remote server. The log data analysis module 173 is configured to analyse log data 175 stored in storage 174. The log data analysis module 173 is configured to take action based on analysis of the log data.

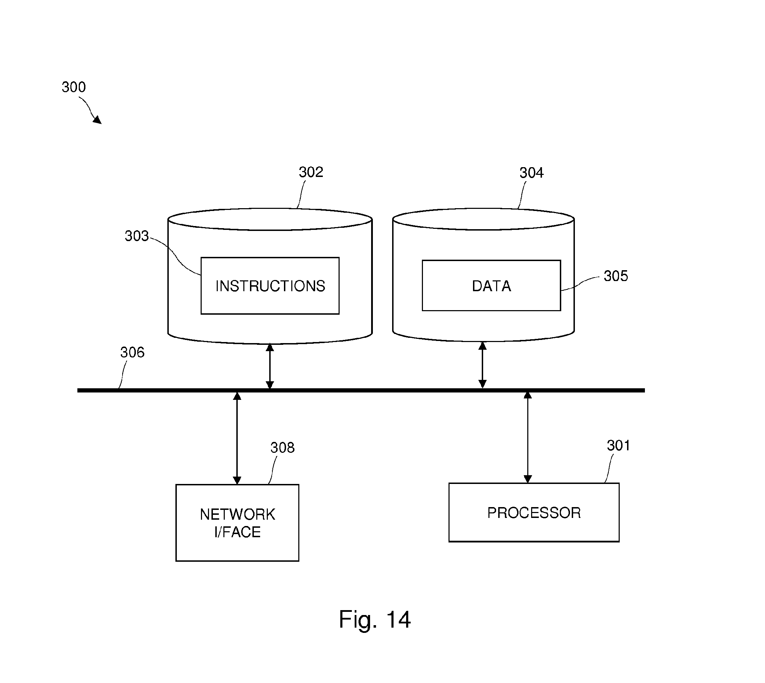

Figure 14 shows an example of processing apparatus 300 which may be implemented as any form of a computing and/or electronic device, and in which embodiments of the system and methods described above may be implemented. Processing apparatus 300 can be provided at the card 10 and/or at the terminal 20. The processing apparatus may participate in any of the methods described above. Processing apparatus 300 comprises one or more processors 301 which may be microprocessors, microcontrollers or any other suitable type of processors for executing instructions to control the operation of the device. The processor 301 is connected to other components of the device via one or more buses 306. Processor-executable instructions 303 may be provided using any computer-readable media, such as memory 302. The processor-executable instructions 303 can comprise instructions for implementing the functionality of the described methods. The memory 302 is of any suitable type such as non-volatile memory, read-only memory (ROM), random access memory (RAM), a storage device of any type such as a magnetic or optical storage device. Memory 302, or an additional memory 304, can be provided to store data 305 used by the processor 301. The data 305 can comprise a table of op codes described above. The processing apparatus 300 comprise one or more communication interfaces 308.

In the examples described above the secure element is configured to start a timer when it sends a response APDU and to stop the timer when it receives a subsequent command APDU. In other examples, the secure element can be configured to start a timer when it receives a command APDU and to stop the timer when it receives a subsequent command APDU. Figure 4 shows this alternative. The secure element starts a timer when it receives a command APDU at time T1' and stops the timer when it receives a subsequent command APDU at time T2. In this alternative, the measured time interval includes a time period T1'→T1 when the secure element performs processing. If the time period T1'→T1 can be quantified and/or if the time period T1'→T1 is relatively constant between different instances of performing processing in response to that command, the time period T1'→T2 can be used in a similar way to described above, to determine if the measured time period is indicative of fraudulent activity. For example, consider T1→T2 has a lower limit of 750ms and T1'→T1 has a typical value of 250ms, then T1'→T2 can have a lower limit of 1,000ms (=1 second).

The steps of the methods described herein may be carried out in any suitable order, or simultaneously where appropriate.

Modifications and other embodiments of the disclosed invention will come to mind to one skilled in the art having the benefit of the teachings presented in the foregoing descriptions and the associated drawings. Therefore, it is to be understood that the invention is not to be limited to the specific embodiments disclosed and that modifications and other embodiments are intended to be included within the scope of this disclosure. Although specific terms may be employed herein, they are used in a generic and descriptive sense only and not for purposes of limitation.

## Claims

1. A method of operating a secure element (10) comprising:
performing (40) a secure transaction by communicating with an external terminal (20), the transaction comprising a plurality of events when the secure element receives a command message (54) comprising a command from the external terminal and sends, in reply, a response message (55) comprising a response to the command message to the external terminal and, during the secure transaction:
determining (43) a time interval between sending a response message (55) to the external terminal (20) and receiving a subsequent command message (54) from the external terminal (20); and,
storing (47) log data indicative of the determined time interval at the secure element (10).

2. A method according to claim 1 further comprising:
storing a threshold data value at the secure element;
comparing the determined time interval with the threshold data value to give a result; and
deciding whether to perform the storing of log data indicative of the determined time interval based on the result.

3. A method according to claim 1 or 2 further comprising sending (49) the stored log data to the external terminal (20).

4. A method according to claim 1 or 2 further comprising performing (48) a security action at the secure element based on the log data.

5. A method according to any one of the preceding claims wherein the transaction comprises a card authentication stage (51), a user verification stage (52) and a transaction authorisation stage (53), and the method determines a time interval between sending a response message (55) to the external terminal (20) and receiving a subsequent command message (54) from the external terminal (20) during one of the stages.

6. A method according to claim 5 wherein the user verification stage (52) comprises sending a Cardholder Verification Method, CVM, message (62) to the external terminal (20) and receiving a verification message (65) from the external terminal (20) carrying a Personal Identification Number, PIN, and the method determines a time interval between sending the Cardholder Verification Method message (62) to the external terminal (20) and receiving the verification message (65) from the external terminal (20).

7. A method according to claim 5 or 6 wherein the user verification stage (52) comprises sending a PIN not OK message (66) to the external terminal (20) and receiving a further verification message (69) from the external terminal (20) carrying a Personal Identification Number, PIN, and the method determines a time interval between sending the PIN not OK message (66) to the external terminal (20) and receiving the verification message (69) from the external terminal (20).

8. A method according to any one of claims 5 to 7 wherein the user verification stage (52) comprises sending a challenge (72) to the external terminal (20) and receiving a verification message (75) from the external terminal (20) carrying an encrypted Personal Identification Number, PIN, and the method determines a time interval between sending the challenge (72) to the external terminal (20) and receiving the verification message (75) from the external terminal (20).

9. A method according to any one of claims 5 to 8 wherein the transaction authorisation stage (53) comprises:
computing an Authorisation Request cryptogram;
sending the Authorisation Request cryptogram, ARQC, message (82) to the external terminal (20); and
receiving an Authorisation Response cryptogram, ARPC, message (85) from the external terminal (20); and the method determines a time interval between sending the Authorisation Request cryptogram message (82) and receiving the Authorisation Response cryptogram message (85).

10. A method according to any one of the preceding claims wherein the protocol between the secure element (10) and the external terminal (20) comprises:
receiving a Read Record message (101);
sending a status message (102) indicating an amount of data to be read;
receiving a Get Response message (103);
sending the data;
wherein the method determines a time interval between sending the status message (102) to the external terminal (20) and receiving the Get Response message (103) from the external terminal (20).

11. A secure element (10) comprising a processor, a memory and a communications interface, the memory containing instructions executable by the processor to cause the processor to:
perform a secure transaction by communicating with an external terminal, the transaction comprising a plurality of events when the secure element receives a command message (54) comprising a command from the external terminal and sends, in reply, a response message (55) comprising a response to the command message to the external terminal and, during the secure transaction:
determine a time interval between sending a response message (55) to the external terminal and receiving a subsequent command message (54) from the external terminal; and,
store log data indicative of the determined time interval at the secure element.

12. A secure element according to claim 11 wherein the instructions executable by the processor cause the processor to:
store a threshold data value at the secure element;
compare the determined time interval with the threshold data value to give a result; and
decide whether to perform the storing of log data indicative of the determined time interval based on the result.

13. A method of operating an authorisation entity (30) comprising:
servicing (161) a secure transaction with a secure element (10), the transaction comprising a plurality of events when the secure element receives a command message comprising a command from an external terminal and sends, in reply, a response message comprising a response to the command message to the external terminal;
receiving (162) log data from the secure element, the log data indicative of a time interval between the secure element sending a response message (55) to the external terminal and receiving a subsequent command message (54) from the external terminal; and,
analysing (163) the log data to determine fraudulent activity.

14. A method according to claim 13, further comprising performing (164) a security action based on the analysis of the log data.

15. An authorisation entity (30) comprising a processor, a memory and a communications interface, the memory containing instructions executable by the processor to cause the processor to:
service a secure transaction with a secure element, the transaction comprising a plurality of events when the secure element receives a command message (54) comprising a command from an external terminal and sends, in reply, a response message (55) comprising a response to the command message to the external terminal;
receive log data from the secure element, the log data indicative of a time interval between the secure element sending a response message (55) to the external terminal and receiving a subsequent command message (54) from the external terminal; and,
analyse the log data to determine fraudulent activity.
